# EUROPÄISCHE PATENTANMELDUNG

(11) **EP 0 966 167 A2**
(43) Veröffentlichungstag der Anmeldung: **22.12.1999**
(21) Anmeldenummer: 99440132.1
(22) Anmeldetag: 03.06.1999
(51) Int. Cl.: H04Q 3/00

(54) **Verfahren zum Anbieten und Bereithalten von Netzkapazität sowie Netzmanagementeinrichtung zur Durchführung des Verfahrens**

(30) Priorität: 19.06.1998 DE 19827347
(71) Anmelder: ALCATEL, 75008 Paris (FR)
(72) Erfinder: Rihaczek, Clemens, Dr., 70563 Stuttgart (DE)
(74) Vertreter: Brose, Gerhard, Dipl.-Ing.

(57) **Zusammenfassung**

Die Erfindung betrifft ein Verfahren zum Anbieten und Bereithalten von Netzkapazität in einem Telekommunikationsnetz, bei welchem in eine Netzmanagementeinrichtung eine von einem Netzbetreiber an einen potentiellen Abnehmer angebotene Netzkapazität (Ch1, Ch2, Ch3) eingegeben wird, bei welchem ein vom Netzbetreiber vorgegebener Parameter (100%, 50%, 80%) für die Wahrscheinlichkeit der Angebotsannahme eingegeben wird, bei welchem in der Netzmanagementeinrichtung eine Wichtung der angebotenen Netzkapazität mit diesem Parameter erfolgt, bei welchem die so gewichtete Netzkapazität zu schon vorab berücksichtigten und in einem Datenspeicher abgelegten Werten hinzuaddiert wird und bei welchem durch die Netzmanagementeinrichtung die insgesamt angebotene gewichtete Netzkapazität, wie sie in dem Datenspeicher abgelegt ist, gesperrt wird, sowie eine Netzmanagementeinrichtung zur Durchführung des Verfahrens.

## Beschreibung

Die Erfindung betrifft ein Verfahren zum Anbieten und Bereithalten von Netzkapazität in einem Telekommunikationsnetz nach dem Oberbegriff des Anspruchs 1 und eine Netzmanagementeinrichtung nach dem Oberbegriff des Anspruchs 6.

Durch die Einführung des Wettbewerbs auch in der Telekommunikation ergibt sich hier eine Situation, die kaum vergleichbar ist mit herkömmlichen Geschäftsvorgängen und die nun mit technischen Mitteln in den Griff gebracht werden soll. Die in einem Telekommunikationsnetz vorhandene Netzkapazität, häufig als Ressourcen bezeichnet, wird nicht wie eine Ware vermarktet, also hergestellt und vertrieben, sondern eher ähnlich einer Immobilie vermietet. Abweichend von der Vermietung von Immobilien sind hierbei unter anderem jedoch die Zeiträume, die zu berücksichtigen sind. Immobilien werden in der Regel sehr langfristig vermietet und es ist auch üblich, bereits in der Endphase eines Mietverhältnisses für die daran anschließende Zeit neu zu vermieten. Von Sonderfällen abgesehen wird auch bei Abgabe eines Angebots keine Freihaltezeit vereinbart, während derer dieses Angebot exklusiv nur für einen Bewerber gilt. Die Netzkapazität in einem Telekommunikationsnetz wird jedoch in anderen Zeiträumen "vermietet". Einerseits werden von den vermittlungstechnischen Einrichtungen des Telekommunikationsnetzes verhältnismäßig kurze Einzelverbindungen geschaltet; andererseits werden von den übertragungstechnischen Einrichtungen des Telekommunikationsnetzes Übertragungskanäle mit höherer Kapazität über längere Zeiträume zur Verfügung gestellt, wobei aber unter Umständen eine Angebotsphase zu berücksichtigen ist, während derer die angebotene Netzkapazität bei Annahme auch tatsächlich zur Verfügung gestellt werden können sollte. Während einer solchen Angebotsphase ist deshalb die angebotene Netzkapazität praktisch blockiert.

Werden nun einerseits jeweils mehrere Angebote erstellt und sind andererseits die Dauern der Angebotsphasen nicht vernachlässigbar gegenüber den daran anschließenden Vermietungszeiträumen, so ist ständig ein technisch voll verfügbarer Teil des Netzes tatsächlich gesperrt.

Der Erfindung liegt die Aufgabe zugrunde, ein Verfahren und eine Netzmanagementeinrichtung anzugeben, mittels derer Netzkapazität angeboten und bereitgehalten werden kann, ohne daß unnötig viel des technisch voll verfügbaren Teils des Netzes tatsächlich gesperrt wird.

Diese Aufgabe wird erfindungsgemäß gelöst durch ein Verfahren nach der Lehre des Anspruchs 1 und eine Netzmanagementeinrichtung nach der Lehre des Anspruchs 6.

Gemäß der Erfindung wird demnach ein Parameter eingeführt, der die Wahrscheinlichkeit der Angebotsannahme berücksichtigt. Entsprechend wird nur ein Teil der angebotenen Netzkapazität gesperrt.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:

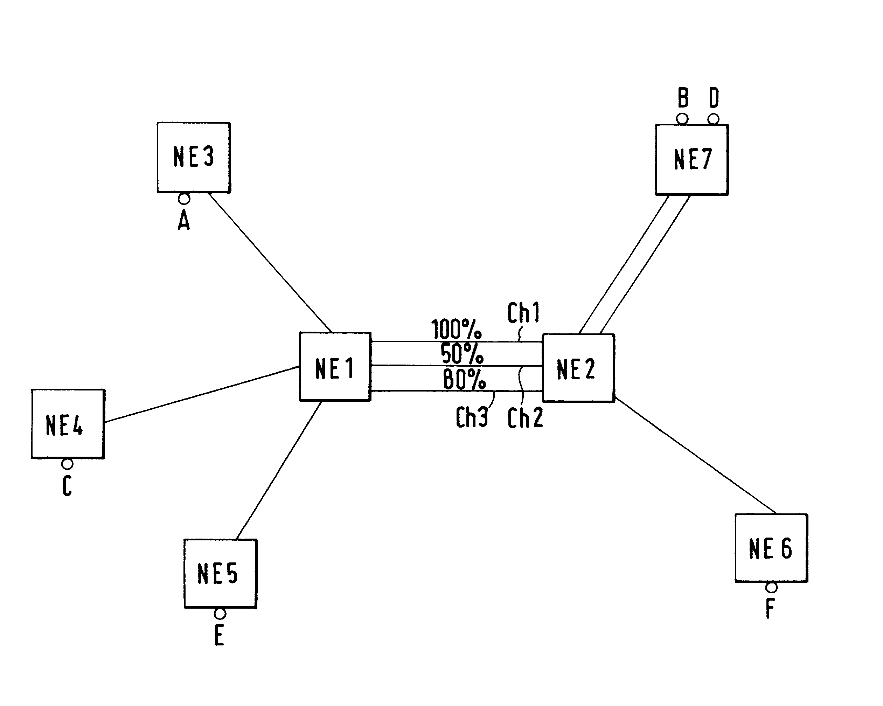

- Figur 1: zeigt einen Ausschnitt aus einem Telekommunikationsnetz, in dem das erfindungsgemäße Verfahren angewendet wird.

Anhand der Figur 1 wird zunächst ein Ausschnitt aus einem Telekommunikationsnetz beschrieben, in dem das erfindungsgemäße Verfahren angewendet wird.

Der Ausschnitt aus dem Telekommunikationsnetz zeigt sieben Netzelemente NE1, ..., NE7, sowie Übertragungskanäle zwischen dem Netzelement NE1, ..., und den Netzelementen NE3, NE4 und NE5 und zwischen dem Netzelement NE2 und den Netzelementen NE6 und NE7. Außerdem sind an den Netzelementen NE3, NE4 und NE5 und an den Netzelementen NE6 und NE7 Anschlüsse A, ..., F angedeutet. Die Netzelemente NE1, ..., und NE2 sind untereinander durch drei Übertragungskanäle CH1, CH2 und CH3 verbunden.

Als Netzelemente NE kommen alle Arten von übertragungstechnischen Netzknoten in Frage. Hier sind in erster Linie sogenannte Crossconnects zu nennen, bei denen nicht Einzelverbindungen, sondern Übertragungskanäle mit höherer Kapazität, insbesondere auf höherer Multiplexebene, geschaltet werden. Gerade Crossconnects werden oft dazu verwendet, Mietleitungen bereitzustellen. Es ist aber auch an andere Arten von Multiplexern, etwa sogenannte Add-Drop-Multiplexer, ADM, zu denken.

Aus der Sicht des Netzbetreibers spielt es nur eine untergeordnete Rolle, auf welche Art eine Verbindung physikalisch realisiert ist. Primär wird hier mit logischen Kanälen mit unterschiedlicher Übertragungskapazität operiert. Diese werden hier und im folgenden teils als Übertragungskanäle, teils vereinfachend als Leitungen bezeichnet.

Die Anschlüsse A, ..., F können Anschlüsse beliebiger Art sein, wie Anschlüsse von Nebenstellenanlagen, Anschlüsse anderer Netzbetreiber oder von Diensteanbietern oder auch Übergänge in andere eigene Netzteile.

Im vorliegenden Beispiel werden nun besonders die drei Übertragungskanäle CH1, CH2 und CH3 zwischen den Netzelementen NE1 und NE2 betrachtet. Dabei wird zunächst unterstellt, daß alle drei Übertragungskanäle untereinander gleichwertig sind, insbesondere die gleiche Kapazität aufweisen.

In der Figur 1 ist nun eine Situation eingezeichnet, in der bereits drei Angebote für diese drei Übertragungskanäle abgegeben wurden. Es soll vom Anschluß A am Netzelement NE3 eine Leitung zum Anschluß B am Netzelement NE7 geschaltet werden; hierfür ist eine Auftragswahrscheinlichkeit von 100% angenommen. Weiter soll vom Anschluß C am Netzelement NE4 eine Leitung zum Anschluß D am Netzelement NE7 geschaltet werden; hierfür ist eine Auftragswahrscheinlichkeit von 50% angenommen. Außerdem soll vom Anschluß E am Netzelement NE5 eine Leitung zum Anschluß F am Netzelement NE6 geschaltet werden; hierfür ist eine Auftragswahrscheinlichkeit von 50% angenommen. Die Gesamtwahrscheinlichkeit, für die Schaltung einer der drei Übertragungskanäle CH1, CH2 und CH3 einen Auftrag zu erhalten, liegt damit bei 230%. Bei drei Übertragungskanälen könnte diese Gesamtwahrscheinlichkeit sogar bis 300% reichen, ohne daß Probleme zu erwarten wären. Es kann also noch ein weiteres Angebot abgegeben werden, solange dafür die Auftragswahrscheinlichkeit 70% nicht überschreitet. In gewissem Umfang ist es damit auch möglich, Aufträge direkt anzunehmen, ohne daß sie die Annahme eines voraus abgegebenen Angebots sind.

Solange ein solches weiteres Angebot nicht abgegeben ist, sind aber die restlichen 70% frei. Sie können dann beispielsweise für Einzelverbindungen verwendet werden. Die übrigen 230% müssen aber reserviert, das heißt, tatsächlich gesperrt werden. Dies erfolgt von einer in Figur 1 nicht dargestellten Netzmanagementeinrichtung aus. Erfindungsgemäß erfolgt nun aber nicht nur das Sperren von Netzkapazität von dieser Netzmanagementeinrichtung aus; die Erfindung baut darauf auf, daß diese Aufgabe bereits durch den Stand der Technik bestens gelöst ist. Vielmehr werden erfindungsgemäß bereits die einzelnen Angebote mit ihren Auftragswahrscheinlichkeiten an der Netzmanagementeinrichtung eingegeben und von dieser berücksichtigt.

Im einfachsten Fall wird als angebotene Netzkapazität die Zahl der angebotenen Leitungen und ein Prozentsatz als Parameter für die Wahrscheinlichkeit der Angebotsannahme eingegeben. An sich genügt es für die Durchführung der Erfindung, die angebotene Netzkapazität mit diesem Parameter zu wichten, das heißt, zu multiplizieren, und die so gewichtete Netzkapazität zu schon vorab berücksichtigten und in einem Datenspeicher abgelegten Werten hinzuzuaddieren und dann die insgesamt angebotene gewichtete Netzkapazität, wie sie in dem Datenspeicher abgelegt ist, zu sperren.

Schon aus anderen Gründen wird eine solche Netzmanagementeinrichtung ohnehin mit einer Datenverarbeitungseinrichtung ausgestattet sein und es werden auch für jedes Einzelangebot die einzelnen Angaben, wie Zahl der angebotenen Leitungen und der für die Wahrscheinlichkeit der Angebotsannahme angenommene und eingegebene Wert zu speichern sein. Die erfindungsgemäß benötigte insgesamt angebotene gewichtete Netzkapazität kann damit ständig überprüft und auch an neue Situationen angepaßt werden.

Eine solche mögliche neue Situation ist die Annahme des Angebots. Im einfachsten Fall wird hier die ursprüngliche Wahrscheinlichkeit negiert hinzuaddiert, das heißt, auf Null gesetzt und diese Leitung aus dem zu vermietenden Bestand gelöscht. Das gleiche, jedoch ohne Löschung aus dem zu vermietenden Bestand, erfolgt bei Ablehnung des Angebots. Eine Angebotsannahme könnte auch durch Ergänzung der Auftragswahrscheinlichkeit auf 100% erfolgen. Die Leitung verbliebe dann im zu vermietenden Bestand, könnte aber an niemand anderes mehr angeboten werden. Mit der Auftragsannahme muß natürlich auch die Leitung durchgeschaltet und dem Auftragnehmer tatsächlich zur Verfügung gestellt und dann auch berechnet werden. Auch dies kann von der Netzmanagementeinrichtung aus automatisch veranlaßt werden.

Auch die Zeit kann als Faktor berücksichtigt werden, der die Situation verändert. Im einfachsten Fall kann der Ablauf der Angebotsfrist automatisch als Nichtannahme des Angebots gewertet werden. Es kann aber auch eine zeitliche Veränderung der Auftragswahrscheinlichkeit gemäß einer bestimmten Vorgabe berücksichtigt werden.

Wird ein Angebot angenommen, für das eine geringe Auftragswahrscheinlichkeit vorgegeben war, so kann es sein, daß die verfügbare Netzkapazität vielleicht schon für diesen Auftrag, zumindest für die verbleibenden Aufträge, nicht mehr ausreicht. Es ist dann Aufgabe des Anbieters dieser Netzkapazität, für Abhilfe zu sorgen. Dies kann jedoch mit Mitteln erfolgen, die bekannt sind, beispielsweise durch Verwendung von Alternativwegen. Dies ist ein möglicher Nachteil der vorliegenden Erfindung, der aber vom Anbieter gegen die Vorteile abzuwägen ist.

Es kann aber bereits erfindungsgemäß vorgesehen werden, daß in einem solchen Fall durch die Netzmanagementeinrichtung automatisch eine Umordnung bereits belegter Netzkapazitäten durchgeführt wird.

Auch weitere Automatismen für die Vereinfachung des Netzmanagements können eingeführt werden, wie etwa eine Zurückweisung neuer Eingaben, wenn dadurch die insgesamt angebotene gewichtete Netzkapazität die noch verfügbare Netzkapazität überschreiten würde oder die Ausgabe einer Warnung, wenn nach Abzug der insgesamt angebotenen gewichteten Netzkapazität die noch verfügbare Netzkapazität einen vorgegebenen Grenzwert unterschreiten würde.

Daß mit dem erfindungsgemäßen Verfahren nicht nur untereinander gleich große, sondern auch unterschiedlich große Kapazitäten verwaltet werden können, und wie dies dann unter Berücksichtigung der jeweils tatsächlich angebotenen Netzkapazität zu erfolgen hat, ergibt sich ohne weiteres aus dem bisher Beschriebenen.

Letztlich wird durch die vorliegende Erfindung eine automatisierte Berücksichtigung der Statistik beim Anbieten und Bereithalten von Netzkapazität in einem Telekommunikationsnetz angewandt. Wie bei allen statistischen Verfahren ist das Ergebnis um so besser, je mehr untereinander vergleichbare oder gleiche Einheiten beteiligt sind. Es bleibt jedoch dem Anbieter überlassen, das erfindungsgemäße Verfahren möglicherweise schon beim Einsatz auch nur einer Einheit anzuwenden.

Durch das Beschreiben des Verfahrens ist zwangsläufig auch die dafür erforderliche Netzmanagementeinrichtung implizit mitbeschrieben.

## Patentansprüche

1. Verfahren zum Anbieten und Bereithalten von Netzkapazität (Ch1, Ch2, Ch3) in einem Telekommunikationsnetz, **dadurch gekennzeichnet,** daß in eine Netzmanagementeinrichtung eine von einem Netzbetreiber an einen potentiellen Abnehmer angebotene Netzkapazität eingegeben wird, daß ein vom Netzbetreiber vorgegebener Parameter (100%, 50%, 80%) für die Wahrscheinlichkeit der Angebotsannahme eingegeben wird, daß in der Netzmanagementeinrichtung eine Wichtung der angebotenen Netzkapazität mit diesem Parameter erfolgt, daß die so gewichtete Netzkapazität zu schon vorab berücksichtigten und in einem Datenspeicher abgelegten Werten hinzuaddiert wird und daß durch die Netzmanagementeinrichtung die insgesamt angebotene gewichtete Netzkapazität, wie sie in dem Datenspeicher abgelegt ist, gesperrt wird.

2. Verfahren nach Anspruch 1, dadurch gekennzeichnet, daß die Eingabe neuer Daten dann zurückgewiesen wird, wenn dadurch die insgesamt angebotene gewichtete Netzkapazität die noch verfügbare Netzkapazität überschreiten würde.

3. Verfahren nach Anspruch 1, dadurch gekennzeichnet, daß nach Eingabe neuer Daten eine Warnung erfolgt, wenn nach Abzug der insgesamt angebotenen gewichteten Netzkapazität die noch verfügbare Netzkapazität einen vorgegebenen Grenzwert unterschreitet.

4. Verfahren nach Anspruch 1, dadurch gekennzeichnet, daß durch Eingabe neuer Daten die insgesamt angebotene gewichtete Netzkapazität angepaßt werden kann, wenn sich Änderungen für die Wahrscheinlichkeit der Angebotsannahme ergeben.

5. Verfahren nach Anspruch 1, dadurch gekennzeichnet, daß durch die Netzmanagementeinrichtung automatisch bei Überlastung oder nach Eingabe eines entsprechenden Auftrags eine Umordnung bereits belegter Netzkapazitäten durchgeführt wird.

6. Netzmanagementeinrichtung zum Anbieten und Bereithalten von Netzkapazität in einem Telekommunikationsnetz, **dadurch gekennzeichnet, daß** die Netzmanagementeinrichtung Eingabemittel aufweist, die so ausgestaltet sind, daß eine von einem Netzbetreiber an einen potentiellen Abnehmer angebotene Netzkapazität (Ch1, Ch2, Ch3) und ein vom Netzbetreiber vorgegebener Parameter (100%, 50%, 80%) für die Wahrscheinlichkeit der Angebotsannahme eingegeben werden kann, daß die Netzmanagementeinrichtung Mittel aufweist, die so ausgestaltet sind, daß eine Wichtung der angebotenen Netzkapazität mit diesem Parameter erfolgt, daß die Netzmanagementeinrichtung Mittel aufweist, die so ausgestaltet sind, daß die so gewichtete Netzkapazität zu schon vorab berücksichtigten und in einem Datenspeicher abgelegten Werten hinzuaddiert wird und daß die Netzmanagementeinrichtung Mittel aufweist, die so ausgestaltet sind, daß die insgesamt angebotene gewichtete Netzkapazität, wie sie in dem Datenspeicher abgelegt ist, gesperrt wird.
